Europäisches Patentamt

European Patent Office

Office européen des brevets

(11) Veröffentlichungsnummer: **0 141 771**
A2

# EUROPÄISCHE PATENTANMELDUNG

(21) Anmeldenummer: 84730115.7

(22) Anmeldetag: 26.10.84

(51) Int. Cl.⁴: **G 02 B 6/28**

(30) Priorität: 26.10.83 DE 3339188

(43) Veröffentlichungstag der Anmeldung: 15.05.85
Patentblatt 85/20

(84) Benannte Vertragsstaaten: AT BE CH DE FR GB IT LI LU NL SE

(71) Anmelder: Heinrich-Hertz-Institut für Nachrichtentechnik Berlin GmbH, Einsteinufer 37, D-1000 Berlin 10 (DE)

(72) Erfinder: Bachus, Ernst-Jürgen, Dr.-Ing., Wikinger Ufer 6, D-1000 Berlin 21 (DE)
Erfinder: Braun, Ralf-Peter, Schillingstrasse 38, D-1000 Berlin 51 (DE)
Erfinder: Strebel, Bernhard, Prof. Dr.-Ing., Am Vierrutenberg 12 c, D-1000 Berlin 28 (DE)

(74) Vertreter: Wolff, Konrad, Heinrich-Hertz-Institut für Nachrichtentechnik Berlin GmbH Einsteinufer 37, D-1000 Berlin 10 (DE)

(54) Optischer Resonator mit einer Monomodefaser als Resonatorring und Verwendung derartiger Resonatoren.

(57) Optischer Resonator mit einer Monomodefaser als Resonatorring und Verwendung derartiger Resonatoren.

In Systemen der optischen Nachrichten- oder Messtechnik mit Ringresonatoren, die über einen Richtkoppler gespeist werden, lassen sich gegenläufige Lichtwellen in einem Lichtwellenleiter, d.h. Reflexionen, vermeiden. Für derartige Resonatorkonfigurationen sind der „freie Spektralbereich" (FSR) und die „Bandbreite" (Δf) charakteristisch.

Die Erfindung zielt darauf ab, für Lichtwellen unterschiedlicher spektraler Breite die erforderlichen Anpassungen zu ermöglichen. Dazu wird der Faserresonator als ein in sich geschlossener Ring (11) aus einer polarisationserhaltenden Monomodefaser (10) gebildet, die zugleich der resonatorringseitigen Hälfte (12 s) eines Faser-Richtkopplers (12), über den der Resonatorring (11) gespeist wird, einverleibt ist. Ein zweiter Faser-Richtkoppler (13) ist entsprechend aufgebaut und dient zur Anzapfung des Resonatorringes (11).

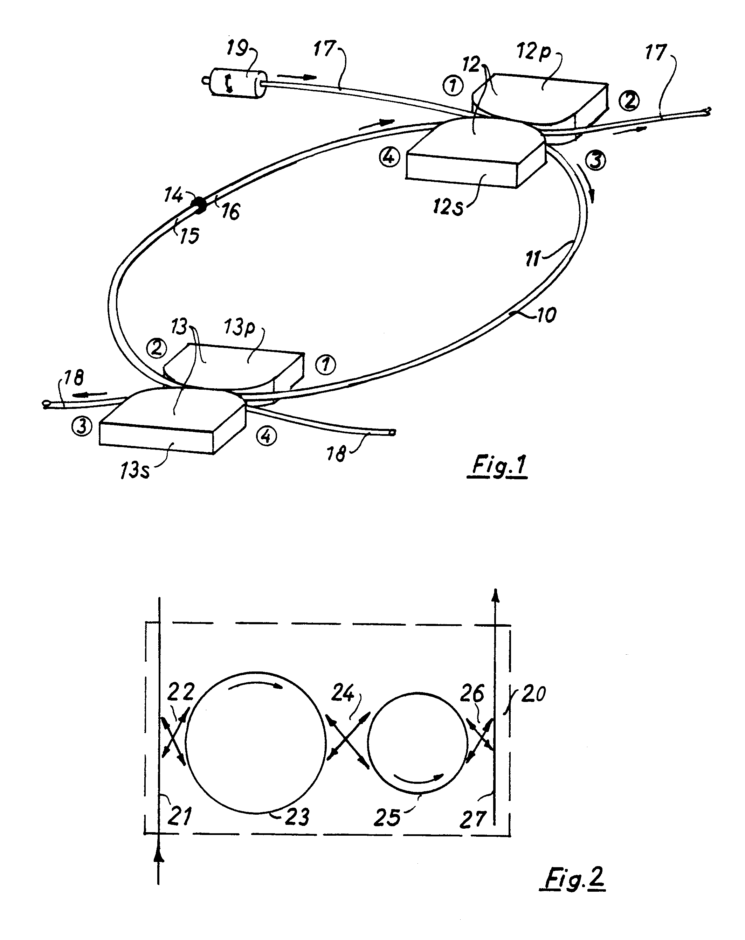

Der freie Spektralbereich SFR wird durch die Länge des Resonatorringes (11) bestimmt, die Güte durch die Dämpfung (Fig. 1).

Derartige Resonatoren lassen sich z.B. für optische Bandfilter, für Multiplexer/Demultiplexer und insbesondere als Diskriminator zur Frequenzstabilisierung eines Lasers verwenden.

0141771

HEINRICH-HERTZ-INSTITUT FÜR NACHRICHTENTECHNIK BERLIN
GMBH                                              12/1083 EP


Optischer Resonator mit einer Monomodefaser als Resonatorring und Verwendung derartiger Resonatoren

Die Erfindung bezieht sich auf einen optischen Resonator mit einer Monomodefaser als Resonatorring und einem den Resonator speisenden Richtkoppler; sie bezieht
sich auch auf die Verwendung derartiger Resonatoren,
insbesondere für Zwecke der optischen Nachrichtentechnik.

In "Optics Letters", Vol. 5, No. 12/Dezember 198o,
Seiten 510 bis 512 wird beispielsweise über Resonanzeffekte in Ringwellenleitern mit geringer Dämpfung berichtet. Die dort für die Untersuchungen verwendete
Konfiguration wurde in Dünnfilmtechnik hergestellt und
weist eine ringförmige Rippe sowie zwei tangential an
dem Ring vorbeiführende gerade Wellenleiter auf. Da in
faseroptischen hybriden Geräten, z. B. mit akustischen
und magnetischen, Temperatur- und Rotationssensoren,
die Justierung, Kopplung und Erhaltung der Polarisation
zu den Schwachstellen gehört, zielt dieser bekannte
Stand der Technik darauf ab, Abhilfe durch den Einsatz
von Dünnfilm-Resonatoren zu schaffen.

Weiterhin ist aus "Optics Letters" Vol. 7, No. 6,
Juni 1982, Seiten 288 bis 290 ein optischer Resonator
bekannt, der aus einer Monomodefaser und einem Richtkoppler zur Speisung des Resonators aufgebaut ist. Die
Funktion dieser bekannten Anordnung beruht auf einer
starken Kopplung von der einen Hälfte des Richtkopplers

0141771

zur anderen. So gelangt das im Faserring geführte Licht vom Eingang der einen Kopplerhälfte zum Ausgang der anderen Hälfte. Dementsprechend gilt auch, daß das von der Quelle zugeführte Licht größtenteils zum gegenüberliegenden Ausgang übergekoppelt wird. Dieser Faserring erlangt demnach allein infolge der starken Kopplung zwischen den beiden Hälften des Richtkopplers die Resonatorfunktion. Dort ist weiterhin eine aus zwei drehbaren Faserschleifen bestehende Einrichtung zur Einstellung der Polarisation vorgesehen, damit Übereinstimmung der an die beiden Eingänge des Richtkopplers gelangenden Lichtwellen bezügl. ch der Polarisationsrichtung erzielt werden kann. Bei dieser bekannten Konfiguration wurde ein im Vergleich zur Dämpfung im Resonator hoher Einfügungsverlust beobachtet. Um eine höhere Finesse, von z. B. über 100, zu erreichen, werden dort Verbesserungen bezüglich des Kopplungsverlusts angestrebt.

Die der Erfindung zugrundeliegende Aufgabenstellung besteht darin, für optische Systeme der Nachrichten- und/ oder Meßtechnik eine passive Komponente zu schaffen, die ohne großen Aufwand hergestellt werden kann, möglichst ohne Reflexionen arbeitet und, vor allem, auf einem Konzept beruht, das leicht durchzuführende Anpassungen an unterschiedliche Anforderungen bezüglich der spektralen Breite einer Lichtwelle ermöglicht.

Dies wird bei einem optischen Resonator, der eine Monomodefaser als Resonatorring und einen den Resonator speisenden Richtkoppler aufweist, gemäß der Erfindung gelöst durch eine polarisationserhaltende Monomodefaser, aus der ein in sich geschlossener Resonatorring sowie eine Hälfte eines Faser-Richtkopplers gebildet ist.

Dabei erfüllt der zu einem Ring geformte Lichtwellenleiter die Forderung nach Reflexionsarmut bzw. -freiheit. Der dazu verwendete faserförmige Lichtwellenleiter kann in der jeweils benötigten Länge von einer Vorratsrolle abgetrennt werden. Zur Erhaltung der Polarisation der im Faserringresonator geführten Lichtwelle dient die für die Erfindung kennzeichnende Monomodefaser selbst, d. h. es sind hierzu keine zusätzlichen Vorkehrungen erforderlich. Weiterhin ist von wesentlicher Bedeutung für die Erfindung, daß der Monomodefaserring nicht erst infolge eines Richtkopplers die Funktion eines in sich geschlossenen Ringes erhält, sondern die Enden des Faserstücks direkt miteinander verbunden sind. Hierdurch wird es bezüglich der Überkopplung möglich, einen Faser-Richtkoppler einzusetzen, bei dem eine Hälfte unmittelbar aus der auch den Resonatorring bildenden Faser besteht. Das bedeutet wiederum, die Überkopplung von einer Hälfte des Faser-Richtkopplers in die andere ist schwach und der Resonator dementsprechend von außen schwach bedämpft.

Zur Frage der Anpassungsmöglichkeit an unterschiedliche spektrale Breiten von Lichtwellen sollen zunächst kurz die Definitionen von Resonatoreigenschaften erwähnt werden. Die "Finesse" F eines Resonators wird definiert als das Verhältnis seines "freien Spektralbereichs" (free spectral range = FSR) zur "Halbwertsbreite der Resonanzkurve" $\Delta f$, also:

$$F = \frac{FSR}{\Delta f} \qquad (1)$$

Der freie Spektralbereich FSR ist umgekehrt proportional zur Länge l des Resonatorringes

$$FSR = \frac{c}{n \cdot l} \qquad (2)$$

mit c = Lichtgeschwindigkeit im Vakuum
und n = Brechzahl der Faser.

Als "Güte" Q wird hingegen das Verhältnis von "Nennfrequenz" $f_O$ zu $\Delta f$ (s. o.) verstanden, also:

$$Q = \frac{f_O}{\Delta f} \qquad (3)$$

Hieraus ist zu erkennen, daß allein aus der Angabe der Finesse nicht für jeden Anwendungszweck eines Resonators bereits alle seine wesentlichen Eigenschaften zu erkennen sind.

Bei einem ringförmigen Lichtwellenleiter kann die Krümmung nicht zu stark gemacht werden, da sonst zu hohe Verluste auftreten. Die Länge l eines Faserring-Resonators findet hierdurch also ein konstruktiv bedingtes Minimum, entsprechend der freie Spektralbereich FSR sein Maximum. Eine hohe Finesse kann sich dann nur für schmale Resonanzkurven, d.h. kleines $\Delta f$ ergeben. Das bedeutet wiederum, Erreger- und Eigenfrequenz müssen sehr gut übereinstimmen. Die Bandbreitenbegrenzung von Resonanzkreisen läßt sich natürlich auf einfache Weise ändern, wenn von Komponenten hoher Güte bzw. Finesse ausgegangen werden kann und eine größere Bandbreite $\Delta f$ erzielt werden soll, als wenn der umgekehrte Weg beschritten werden muß. Die erfindungsgemäße Lösung beruht in dieser Hinsicht auf dem zuerst genannten Weg, indem weitgehend unabhängig voneinander die Eigenschaf-

0141771

ten des Resonators sowie des Kopplers festgelegt werden können und deren gegenseitige Beeinflussung, insbesondere der Einfluß eines Kopplers auf den Resonator, auf einer losen Kopplung zwischen diesen Komponenten beruht.

Besonders bevorzugte Ausführungsformen der Erfindung weisen einen zweiten Faser-Richtkoppler zur Anzapfung des Resonatorringes auf. Über eine solche Anzapfung, die ein genaues Bild der Resonanzverhältnisse im Resonatorring liefert, kann beispielsweise durch Vergleich mit der über den ersten, den Resonator speisenden Faser-Richtkoppler zugeführten Erregergröße ein Differenzsignal gebildet werden, das sich weiter auswerten läßt. Es kann aber auch die über diesen zweiten Faser-Richtkoppler den Resonator verlassende Lichtwelle direkt einer weiteren Komponente, z. B. einem weiteren optischen Resonator, zugeführt werden. Im zuletzt genannten Fall werden z. B. beide Hälften des Faser-Richtkopplers, der die Kopplung zwischen dem ersten und dem zweiten Resonatorring bewirkt, jeweils von den Monomodefasern der beiden Resonatorringe gebildet.

Einen Einfluß auf die Güte und Finesse des Resonatorringes hat die Verbindung der beiden Enden des Faserstücks, aus dem der Ring besteht. Diese Verbindung muß auch eine ausreichende Standfestigkeit aufweisen. Bevorzugte Ausführungsformen der Erfindung sind deshalb mit einem geschweißten Spleiß zwischen den Enden der den geschlossenen Resonatorring bildenden, polarisationserhaltenden Monomodefaser ausgebildet.

Aus den weiter oben bereits erwähnten Gründen kann die Länge eines zu einem Ring geformten Lichtwellenleiters, insbesondere einer Faser, nicht beliebig kurz gewählt werden. Krümmungsradien von nicht weniger als ca. 2,5 cm, d. h. Resonatorringe mit einer Länge von ca. 15 cm oder mehr, sind für Ausführungsformen der Erfindung zweckmäßig. Eine obere Grenze für die Länge ergibt sich unmittelbar aus dem jeweils geforderten Wert für den freien Spektralbereich FSR.

Vorteilhafte Ausführungsformen der Erfindung können mit Faser-Richtkopplern aufgebaut sein, bei denen die zweite Hälfte von einer polarisationserhaltenden Monomodefaser gebildet ist, die mit der den Resonatorring bildenden Faser identisch ist. Dies wäre z. B. ohnehin dann der Fall, wenn zwei Resonatorringe, deren Fasern identisch sind, miteinander über einen Faser-Richtkoppler so verkoppelt werden, wie es bei Ausführungsformen der Erfindung in ihrer Grundform vorgesehen ist. Weniger kritisch ist ein Aufbau eines Faser-Richtkopplers, bei dem die Fasern jeder Hälfte z. B. unterschiedliche Kerndurchmesser, Brechzahlen oder Dämpfungen aufweisen. Die Vorteile dieser Ausführungsform der Erfindung kommen vorwiegend bei solchen Faser-Richtkopplern in Betracht, mit denen ein polarisationserhaltender Faserring gespeist wird. Faser-Richtkoppler, mit denen ein solcher polarisationserhaltender Faserring angezapft wird, können hingegen sekundärseitig auch mit einer die Polarisation nicht erhaltenden Faser ausgerüstet werden, wenn z. B. eine opto-elektrische Signalwandlung folgt.

Für eine primärseitig in einem Faser-Richtkoppler vorgesehene, polarisationserhaltende Monomodefaser ist eine weitere Ausführungsform der Erfindung besonders vorteilhaft, die ein um seine Achse drehbares Ende der Faser aufweist, die zum speisenden Faser-Richtkoppler führt. Dieses Ende, das z. B. an einen Halbleiter-Laser angekoppelt wird und dort ohnehin genau justiert werden muß, läßt sich dann dort auch hinsichtlich der Polarisationsrichtung so einstellen, daß Übereinstimmung zwischen den an die beiden Eingänge des Faser-Richtkopplers gelangenden Lichtwellen entsteht.

Vorteilhafte Verwendungen von Ausführungsformen der Erfindung kommen beispielsweise für nachrichtentechnische Zwecke in Betracht, nämlich für optische Bandfilter, für Multiplexer und insbesondere als Diskriminator zur Stabilisierung eines Lasers. Einzelheiten hierzu werden nachfolgend im Zusammenhang mit den in der Zeichnung schematisch dargestellten Ausführungsformen der Erfindung näher erläutert. Dabei zeigen:

Fig. 1: einen optischen Faserring-Resonator,

Fig. 2: ein optisches Bandfilter mit zwei Faserring-Resonatoren,

Fig. 3: einen optischen Multiplexer/Demultiplexer mit Faserring-Resonatoren,

Fig. 4: eine Meßschaltung (Blockschaltbild) für einen optischen Resonator,

Fig. 5: Resonanzkurven für einen Resonator gemäß Fig. 4,

Fig. 6 a) und b): Schaubilder für die Leistungsdifferenz $P_{opt}$ zwischen Absorptions- und

und Transmissionsresonanz für unterschiedliche (a) und übereinstimmende (b)
Polarisationsrichtungen der Erreger- und
Resonanzwelle,

Fig. 7: eine Diskriminatorschaltung (Blockschaltbild) für Laser-Frequenzstabilisierung und

Fig. 8: ein Schaubild der Laser-Frequenz mit und
ohne Stabilisierung.

Die in Fig. 1 dargestellte Konfiguration eines optischen Ringresonators enthält einen in sich geschlossenen Resonatorring 11, der aus einer polarisationserhaltenden Monomodefaser 10 gebildet ist. Dazu sind die Enden 15 und 16 der Faser 10 an einem Spleiß 14 beispielsweise verschweißt.

Der Resonator wird über einen Faser-Richtkoppler 12 gespeist. Im Faser-Richtkoppler 12 läuft eine Faser 17
durch die eine Kopplerhälfte 12 p und die Faser 10 des
Resonatorringes 11 durch die zweite Kopplerhälfte 12 s.
Die Kopplung zwischen diesen beiden Hälften 12 p und
12 s ist schwach, z. B. 10 dB, d. h. von der Faser 17
gelangt nur ein kleiner Anteil der Erregerwelle in die
Faser 10. Die sich im geschlossenen Resonatorring 11
aufbauende Resonanzwelle läuft dort um und verliert am
Richtkoppler 12 einen ebenfalls nur geringen Anteil,
der in Ausbreitungsrichtung der Erreger- bzw. Resonanzwelle an die Faser 17 abgegeben wird.

Am Faser-Richtkoppler 12 sind die Tore mit den eingekreisten Ziffern 1, 2, 3 und 4 bezeichnet. Der Aufbau ist insoweit an sich symmetrisch, d. h., die Erregerwelle könnte sowohl über das Tor 1 als auch über das Tor 2 des Faser-Richtkopplers 12 zugeführt werden. In Fig. 1 ist die erstgenannte Möglichkeit gewählt und entsprechend durch eingezeichnete Pfeile angegeben. Die starke Kopplung tritt somit in Richtung von Tor 1 nach Tor 2 bzw. von Tor 4 nach Tor 3, schwache Kopplung von Tor 1 nach Tor 3 bzw. von Tor 4 nach Tor 2 auf.

Die Konfiguration gemäß Fig. 1 zeigt auch noch einen zweiten Faser-Richtkoppler 13, über den der Resonatorring 11 angezapft wird. Entsprechend dem Koppler 12 läuft im Koppler 13 die Faser 10 des Resonatorringes 11 durch die eine Kopplerhälfte 13 p und eine Faser 18 durch die zweite Kopplerhälfte 13 s. Der Anteil der im Resonatorring 11 umlaufenden Resonanzwelle, der über den Koppler 13 ausgekoppelt wird, gelangt in Ausbreitungsrichtung der Lichtwelle über das Tor 3 der Kopplerhälfte 13 s in die Faser 18. Das am Tor 4 befindliche Ende der Faser 18 ist reflexionsfrei abgeschlossen, z. B. von Immersionsflüssigkeit umgeben.

Um Übereinstimmung der Polarisationsrichtungen der über den Koppler 12 eingespeisten Erregerwelle und der im Resonatorring 11 umlaufenden Resonanzwelle, also der über die Tore 1 und 4 in den Koppler 12 einlaufenden Lichtwellen herstellen zu können, wird vorteilhaft in unmittelbarer Nähe der Quelle, insbesondere eines Lasers, das Ende 19 der Faser 17 um seine Achse dreh bzw. schwenkbar angeordnet sein.

Die Fig. 2 zeigt den prinzipiellen Aufbau eines optischen Bandfilters 20, dem das Gemisch mehrerer optischer Frequenzen über eine Faser 21 zugeführt wird. Weitere, nicht dargestellte, derartige optische Bandfilter, insbesondere für andere Frequenzbänder, können ebenfalls von der Faser 21 gespeist werden.

Innerhalb des optischen Bandfilters 20 wird über einen ersten Faser-Richtkoppler 22 dem ersten Faser-Resonatorring 23 ein - nicht zu geringer - Lichtwellenanteil von der Faser 21 zugeführt. Infolge seiner Länge ergibt sich im Resonatorring 23 ein spezifisches Resonanzfrequenzrast. . Der zweite Faser-Resonatorring 25 ist über einen Faser-Richtkoppler 24 an den ersten Resonatorring 23 gekoppelt. Für den zweiten Resonatorring 24 ergibt sich infolge seiner z. B. geringeren Länge ein spezifisches Frequenzraster mit breiteren Abständen der Resonanzen. Dort, wo die Resonanzen beider Raster übereinstimmen, befindet sich der Durchlaßbereich des Bandfilters 20. Das Ausgangssignal gelangt vom zweiten Resonatorring 25 über einen weiteren Faser-Richtkoppler 26 in eine Faser 27 und kann von dort aus z. B. einem optischen Verstärker zugeführt oder in sonst gewünschter Weise weiter verarbeitet werden. Die Reihenfolge der beiden Resonatorringe 23 und 25 kann ohne weiteres vertauscht werden.

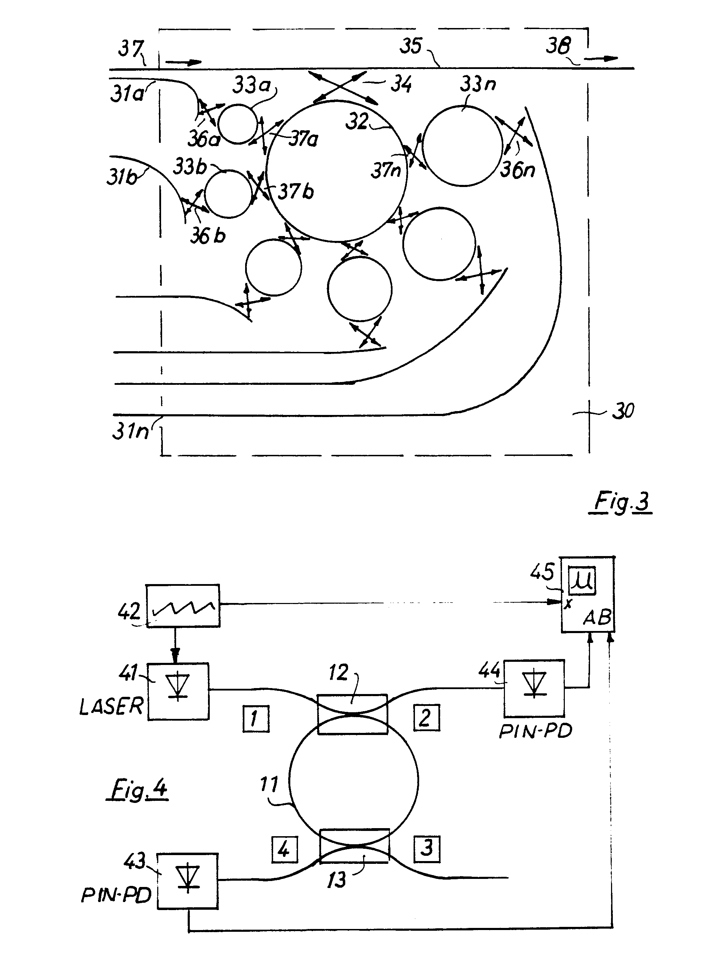

Der Fig. 3 ist der Aufbau einer Multiplex- bzw. Demultiplex-Einrichtung 30 zu entnehmen, die mit optischen Resonatoren aufgebaut ist. In n Fasern 31, d.h. 31a... 31 n, werden die Einzelsignale geführt, die Faser 35 führt diese Einzelsignale im optischen Frequenzmultiplex. Für jedes Einzelsignal stellt die Kombination des gemeinsamen Faser-Ringresonators 32 mit einem spezifischen Faser-Ringresonator 33 n ein optisches Bandfilter entsprechend Fig. 2 dar. Dementsprechend haben die Resonatorringe 33 n alle verschiedene Längen. In ihrer Funktion als
Multiplexer gelangen die über die Fasern 31 n zugeführten Einzelsignale über erste Faser-Richtkoppler 36 n
in den jeweiligen Ringresonator 33 n und von dort über
einen zugehörigen Faser-Richtkoppler 37 n in den gemeinsamen Ringresonator 32. Die Ringresonatoren 33 n
sind so dimensioniert, daß ein spezifisches Einzelsignal niemals in den Durchlaßbereich eines anderen
"Bandfilters" gelangt. Alle eingespeisten Einzelsignale
gelangen aus dem gemeinsamen Resonatorring 32 über einen Faser-Richtkoppler 34 auf die Faser 35 und können
von dem mit 38 bezeichneten Anschluß auf eine Übertragungsstrecke weitergeleitet werden.

In ihrer Funktion als Demultiplexer gelangen im optischen Frequenzmultiplex die verschiedenen Einzelsignale
über den Empfangsanschluß 37 in die Faser 35 und von
dort über den Koppler 34 jeweils in ein zugehöriges
Bandfilter, bestehend aus dem gemeinsamen Resonatorring 32 und dem spezifischen Resonatorring 33 n mit
seinen zugehörigen Kopplern 37 n, 36 n und schließlich
auf die jeweilige Faser 31 n.

Die Fig. 4 zeigt als Blockschaltbild einen Versuchsaufbau für Messungen an einem Faser-Resonator. Ein Bericht
hierüber ist auch für eine Veröffentlichung in "Electronics Letters" (E.-J. Bachus, R.-P. Braun, B. Strebel: "Polarization-Maintaining Single-Mode Fibre Resonator") vorgesehen. Die Bezugszeichen in Fig. 4 entsprechen, so weit möglich, denen in Fig. 1, d. h. der
Resonatorring 11 bildet mit den beiden Faser-Richtkopplern 12 und 13 die zu untersuchende Konfiguration. In rechteckiger Umrahmung sind hierfür die Tore 1, 2, 3 und 4 angegeben, die - soweit überhaupt - nur zufällig mit den Bezeichnungen der Tore der Faser-Richtkoppler 12 und 13 in Fig. 1 übereinstimmen.

Dem Tor 1 der Resonatorkonfiguration wird von einem Halbleiter-Laser (Hitachi HLP 1400) eine Erregerwelle mit der Wellenlänge $\lambda = $ 831 nm zugeführt. Die Sekundärhälfte des Kopplers 12 und die Primärhälfte des Kopplers 13 bestehen aus derselben Faser, aus der ein in sich geschlossener Faserring gebildet ist, d. h. die Faserenden sind verspleißt. Die Ausgangstore 2 und 4 der Resonator-Konfiguration sind an PIN-Dioden 43, 44 angeschlossen. Damit wird das optische Transmissionsverhalten untersucht. Am Ausgangstor 4 ist das Faserende reflektionsfrei angepaßt. Die Laser-Frequenz wird von einem Sägezahngenerator 42 gewobbelt und das Resonanzverhalten auf einem Oszillographenschirm 45 sichtbar gemacht.

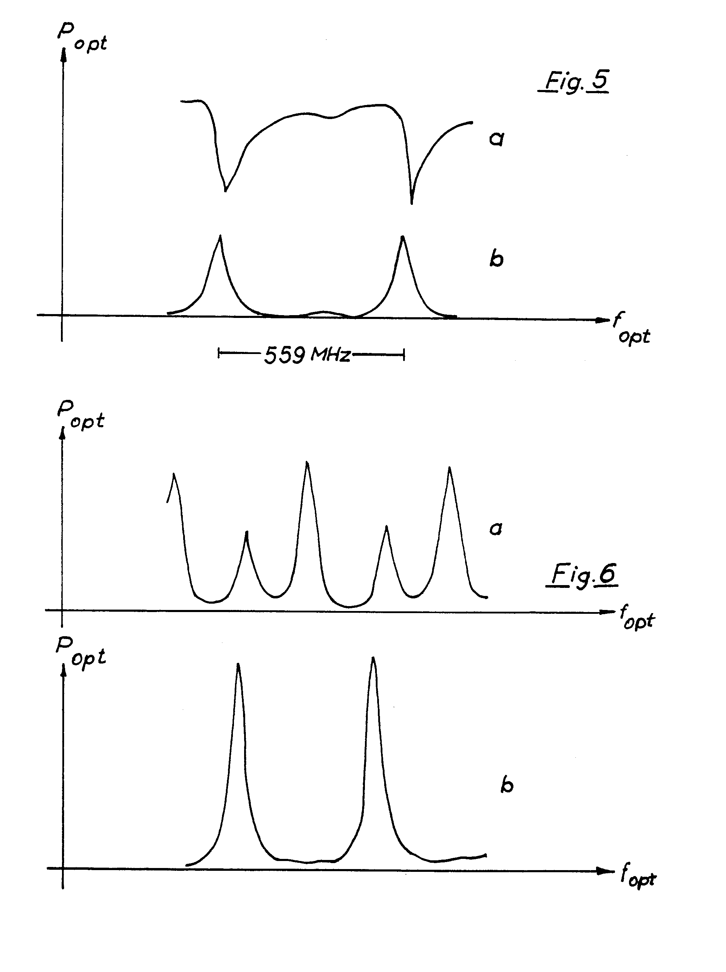

In Fig. 5 ist als obere Kurve (a) die Absorptionsresonanz am Ausgangstor 2 und als untere Kurve (b) die Transmissionsresonanz am Ausgangstor 4 der Resonatorkonfiguration gemäß Fig. 4 dargestellt. Den unterschiedlichen Phasenkonstanten der beiden Polarisationsrichtungen der Faser entsprechend sind zwei Arten von Resonanzspitzen zu erkennen. Die Resonanzen sind periodisch mit der optischen Frequenz. Die gegenseitige Lage der beiden Resonanzmoden ist entsprechend der Schwebungswellenlänge der beiden Polarisationsrichtungen verschoben.

Die Amplitude der beiden Resonanzkurven hängt vom Polarisationswinkel am Eingangstor 1 der Resonatorkonfiguration ab. Eine der beiden kann unterdrückt werden, wenn die Polarisationsrichtung am Eingangstor 1 genau justiert wird.

In Fig. 6 sind die Verhältnisse, d. h. die Leistungsdifferenz $P_{opt}$ zwischen den Ausgangstoren 2 und 4 der Resonatorkonfiguration gemäß Fig. 4 dargestellt. Die Kurve a) zeigt die Verhältnisse bei einem Unterschied von $25^{\circ}$ zwischen den beiden Polarisationsrichtungen. Es sind dabei zwei Resonanzspitzen, eine stärkere und eine schwächere, zu erkennen. Die Kurve b) zeigt nur noch eine Resonanzspitze. Dabei sind die beiden Polarisationsrichtungen genau aufeinander justiert.

Der Resonatorring 11 gemäß Fig. 4 hat eine Länge von 35,8 cm. Daraus ergibt sich ein freier Spektralbereich von 559 MHz. Einer Bandbreite $\Delta f = 62$ MHz entspricht eine Finesse $F = 9$.

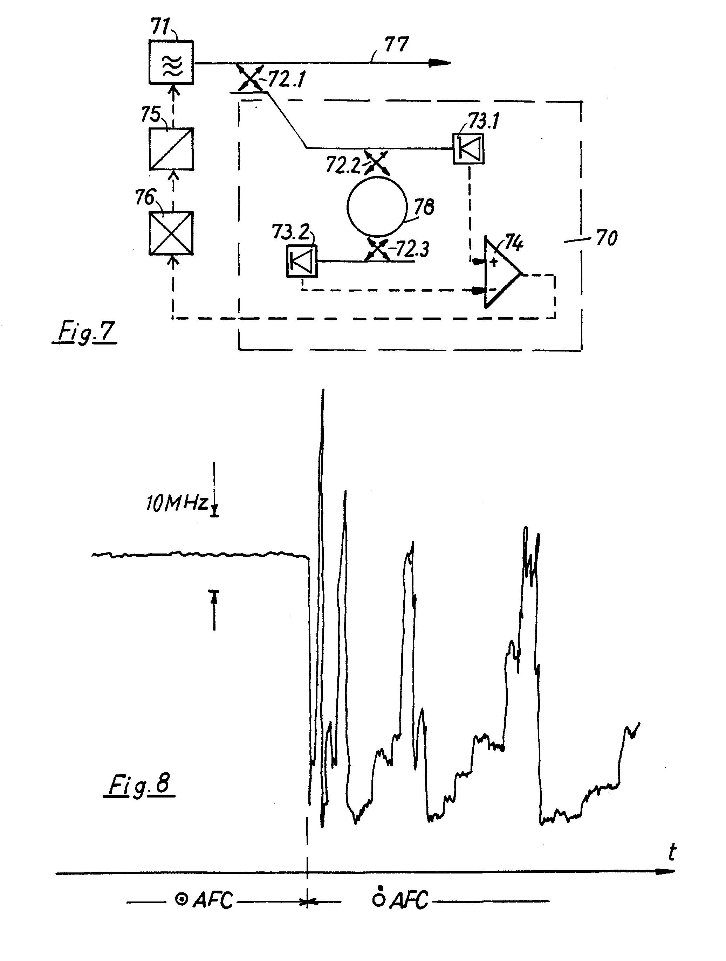

In Fig. 7 ist als eine besonders bevorzugte Verwendung einer Ausführungsform der Erfindung als Blockschaltbild eine Diskriminatorschaltung 70 zur Frequenzstabilisierung eines Lasers 71 dargestellt. Von einer Faser 77, die an den Laser 71 angekoppelt ist, wird über einen Monomode-Richtkoppler 72.1 die Erregerwelle in die Diskriminatorschaltung 70 eingekoppelt. Die Erregerwelle wird einerseits unmittelbar einem Detektor 73.1 zugeführt, andererseits über einen Monomoderichtkoppler 72.2 einem Faserring-Resonator 78, der über einen dritten Monomoderichtkoppler 72.3 angezapft wird. Dort ist ein zweiter Detektor 73.2 angeschlossen. Beide Detektoren 73.1 und 73.2 liefern ihre Signale an einen Differenzverstärker 74, dessen Ausgangssignal einem Regler 76 (PID-Regler) zugeführt wird. Der Laser 71 wird von einer Stromquelle 75 gespeist, die nun an den Regler 76 angeschlossen ist. Hiermit wird also der Laser 71 opto-elektrisch stabilisiert. Das heißt, die Erregerwelle, die der Laser 71 abgibt, wird fest an die Resonanzfrequenz des optischen Resonators gebunden.

Die Auswirkungen dieser Laser-Frequenzstabilisierung sind der in Fig. 8 dargestellten Kurve zu entnehmen. Bei eingeschalter Frequenzstabilisierung (AFC) schwankt die Frequenz um weniger als 1 MHz; ohne Stabilisierung um ca. 60 MHz.

HIERZU 4 Blatt ZEICHNUNGEN

0141771

HEINRICH-HERTZ-INSTITUT FÜR NACHRICHTENTECHNIK BERLIN
GMBH                                    12/1083 EP

Patent-/Schutz-Ansprüche

1. Optischer Resonator mit einer Monomodefaser als Resonatorring und einem den Resonator speisenden Richtkoppler,
g e k e n n z e i c h n e t   d u r c h
eine polarisationserhaltende Monomodefaser ( 10 ), aus der ein in sich geschlossener Resonatorring ( 11 ) sowie eine Hälfte ( 12 s ) eines Faser-Richtkopplers ( 12 ) gebildet ist.

2. Optischer Resonator nach Anspruch 1,
g e k e n n z e i c h n e t   d u r c h
einen zweiten Faser-Richtkoppler ( 13 ) zur Anzapfung des Resonatorringes ( 11 ).

3. Optischer Resonator nach Anspruch 1 oder 2,
g e k e n n z e i c h n e t   d u r c h
einen geschweißten Spleiß ( 14) zwischen den Enden (15, 16) der den geschlossenen Resonatorring ( 11 ) bildenden, polarisationserhaltenden Monomodefaser ( 10 ).

4. Optischer Resonator nach einem der Ansprüche 1 bis 3,
g e k e n n z e i c h n e t   d u r c h
einen Resonatorring ( 11 ) mit einer Länge von ca. 15 cm oder mehr.

5. Optischer Resonator nach einem der Ansprüche 1 bis 4,
g e k e n n z e i c h n e t   d u r c h
Faser-Richtkoppler ( 12, 13 ), bei denen die zweite Hälfte ( 12 p, 13 s ) von einer polarisationserhaltenden Monomodefaser ( 17, 18 ) gebildet ist, die mit der

0141771

den Resonatorring ( 11 ) bildenden Faser ( 10 ) identisch ist.

6. Optischer Resonator nach Anspruch 5, gekennzeichnet durch ein um seine Achse drehbares Ende ( 19 ) der zum speisenden Faser-Richtkoppler ( 12 ) führenden polarisationserhaltenden Monomodefaser ( 17 ).

7. Verwendung eines optischen Resonators nach einem der Ansprüche 1 bis 6 für optische Bandfilter ( 20 ).

8. Verwendung eines optischen Resonators nach einem der Ansprüche 1 bis 6 für Multiplexer ( 30 ).

9. Verwendung eines optischen Resonators nach einem der Ansprüche 1 bis 6 als Diskriminator ( 70 ) zur Stabilisierung eines Lasers ( 71 ).

_Fig.1_

_Fig.2_

_Fig. 3_

_Fig. 4_

_Fig. 5_

559 MHz

_Fig. 6_

0141771

_Fig.7_

10MHz

_Fig.8_

t

⊙ AFC          ⊙ AFC